# EUROPEAN PATENT SPECIFICATION

(11) **EP 3 918 197 B1**
(45) Date of publication and mention of the grant of the patent: **03.09.2025**
(21) Application number: 19706378.7
(22) Date of filing: 28.01.2019
(51) Int. Cl.: F03D 17/00, F03D 80/50

(54) **METHOD OF INSPECTION OF WIND TURBINE BLADES**
VERFAHREN ZUR INSPEKTION VON WINDTURBINENSCHAUFELN
PROCÉDÉS D'INSPECTION DE PALES D'ÉOLIENNE

(43) Date of publication of application: 08.12.2021
(73) Proprietor: Helispeed Holdings Limited, Blackpool, Lancashire FY4 2QY (GB)
(72) Inventor: PACKER, Geoffrey, William, Blackpool Lancashire FY4 2QY (GB)
(74) Representative: Franks & Co (Mancunium) Limited
(86) International application number: PCT/EP2019/051986
(87) International publication number: WO 2020/156629

(56) References cited:
- KR-A- 20180 025 414
- US-A1- 2011 090 110
- US-A1- 2013 235 897
- US-A1- 2015 168 352
- US-A1- 2018 149 138

## Description

### Field of the Invention

The present invention relates to methods of inspection of wind turbine blades. More particularly but not exclusively, it relates to methods of inspection and assessment of wind turbine blades in order to more accurately identify defects and their severity so as to determine when replacement of a blade or other parts of a wind turbine is necessary.

### Background of the Invention

Wind turbines blades are typically built from composite airfoil shaped structures that have a hollow acoustic cavity, and that affixes to a blade assembly rotor or hub which is attached to a nacelle. The nacelle rests on a vertical tower. Because of the constant aerodynamic forces, dynamic loads and frequent load fluctuations under demanding environmental conditions turbine blades are commonly subjected to when freely moving in the wind, and due to extreme weather conditions, lightning strikes, gravitational loads they experience, physical impact with objects such as birds, and because of operational errors, most blades will over time experience damage or defects in the form one or more of leading edge erosion, trailing edge cracks; chinks, splits, cracks, delamination and holes. Further, water vapor can sometimes accumulate and condense inside the hollow part of the blade, disturbing the balance of the rotor, freezing, or boiling under lighting strike and cracking the blade structure, or flowing down the blade and into the nacelle. Blade damage can cause sudden structural failure which can affect the normal working order of the wind turbine, or endanger the lives of humans, or animals.

Historically, several methods have been devised and are currently used in the identification, inspection and repair of damage to wind turbine blades, so as to maintain optimal performance of the turbine. One popular method involves getting a human inspector or engineer to climb onto the turbine, and with the help of ropes, harnesses or suspended platforms, to abseil down each blade while visually inspecting the blade surfaces for signs of damage. A similar method entails temporarily affixing machines that are held by ropes or suction pumps, to the turbine, in order for the machines to scale the length and breadth of each blade, for optical inspection of the blade surfaces or to scan for internal damage using ultrasound or thermal imaging cameras. Both methods are time-consuming and require suspending the normal operation of the wind turbines that are due to be inspected, because for safety purposes most such inspections cannot be undertaken while the wind turbines are in operation. Thus, brakes are applied to halt the motion of the turbines that are due to be inspected. For turbines that are installed in offshore windfarms, in the often icy, windy, rainy sub-zero temperature conditions, maintenance, inspection and repair necessitates hiring a ship with a specialized crew and expensive equipment. The cost of this process is high, and the lost revenue as a result of outages or downtime invariably plays a part in impeding the uptake of wind turbines across the world. It influences their high cost and constrains the net gain generated by the clean energy they produce. However, newer methods of fault identification and inspection have emerged that appear promising.

It is known to provide an unmanned aerial vehicle (UAV) to fly in proximity to wind turbines, gathering structural data which can simultaneously or subsequently be used to identify defects in the blade construction of the wind turbine. Further, it is also known to use a flying craft such as a helicopter to gather such data. Such craft are usually equipped with data acquisition apparatus such as thermal imaging cameras, optical cameras, ultrasonic transducers, Infra-red cameras or other data acquisition apparatus. One challenge such data capture methods face is being able to accurately capture the external structure of the wind turbine to a high enough resolution while the turbine is in operation, so as to enable the recreation of an accurate digital image from which any surface faults can be easily identified. Another challenge is being able to identify internal structural failure or damage, which may not be obvious from images depicting the external surface of the blade. A further challenge is the accurate quantification of damage severity, so as to ascertain the point at which blade damage sufficiently affects the turbine's performance to justify the expense of blade replacement.

EP3077669B1 discloses a method of optically detecting damage in a wind turbine with the aid of an aircraft such as a helicopter, or using an unmanned aerial vehicle. The aircraft has a thermal imaging camera and the method entails orienting a rotor blade in a vertical position, and subsequently flying along and scanning the front and rear sides of the blade by following a prescribed flight path. While such a method may capture image data of a wind turbine, it is not ideally suited for detecting damage on moving wind turbine blades. Firstly, it would require engineers to align the wind turbine blades in a specific orientation, itself a difficult task as the blade assembly alone in larger wind turbines can weigh as much as 36 tones. Thus orienting a blade into a vertical position, stopping it, and scanning it, then re-aligning a second blade to the same vertical position, to repeat the procedure, followed by the same process for a third blade (if the turbine has one), would be a difficult mechanical task which could leave workmen open to the risk of injury. Further, the scanning described would not accurately capture the whole airfoil shape of the blade, since according to the disclosure, the scanning substantially only captures the sides of the blades (and not the curved sections in-between the faces of the airfoil on the leading age or the trailing edge). Thus, the digital images captured, even after reconstruction will not be an accurate representation of the real blade, and damage that occurs in the 'blind spots' could be missed. Further, if the wind turbines are arranged together closely, as is the case in some wind farms, the scanning would be dangerous for a helicopter crew to maneuver in between the wind turbines, in the strong winds typical of off-shore areas. Finally, the method according to this teaching cannot be used while the wind turbine is in operation and freely moving in the wind.

US2018100489A1 discloses a method and a device for determining the position of defects on rotor blades of a wind turbine while in an installed state, with reference to the hub of the turbine, using a "locating instrument" that has a GPS module, and an analysis unit connected to the GPS module (which has access to a database having design data of the wind turbine). It has a camera and sensors such as thermographic camera, a voice recording means, an ultrasonic sensor, a terahertz spectroscope, and a tomograph, all disposed on the locating instrument. The locating instrument can be guided automatically or manually along the rotor blade to detect the damage, and record the position of a defect using the GPS module. The method according to this disclosure is not ideally suited for detecting damage to moving wind turbine blades because using the GPS module to calculate the position and height of damage relative to the hub relies on the blade being stationary and its vector coordinates that are due to be recorded being fixed. If the blade is moving in cyclical motion, each point on it is continually changing position and direction, so the coordinates will continually change, thus the method according to this teaching cannot be used.

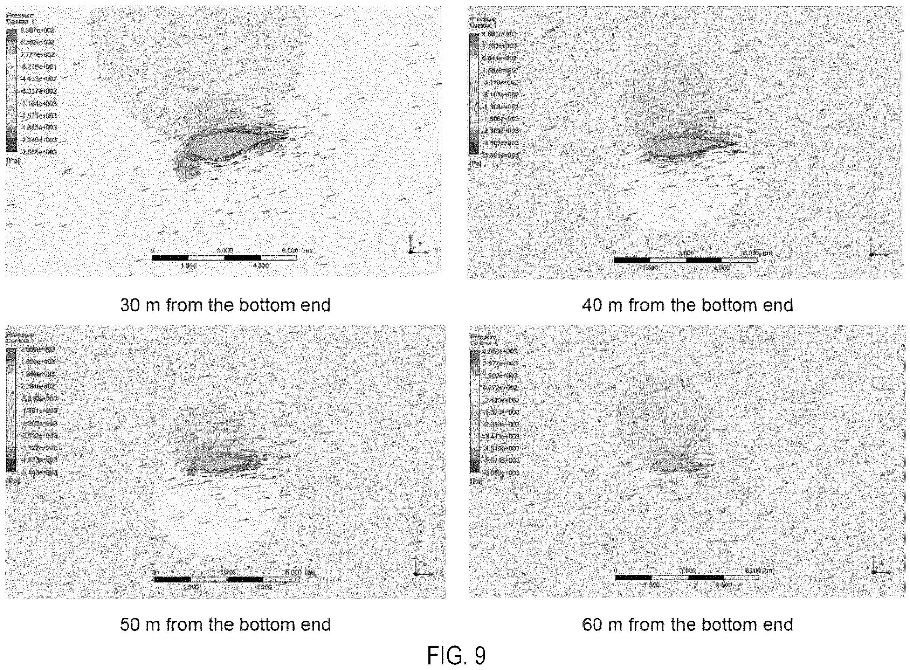

**.** US8120522B2 discloses a wind turbine blade inspection system and a method that uses a frequency modulated continuous wave radar system configured to be movable with respect to a wind turbine blade. It transmits reference microwave signals and receives the reflected microwave wave. It has a processor configured for using a synthetic aperture analysis technique to obtain a focused image of at least a region of the wind turbine blade based on the reflected microwave signals. The device according to this system is not ideally suited for detecting damage to moving wind turbine blades for a number of reasons. Firstly, relying on synthetic-aperture radar (SAR) techniques (which determines a 3D image from reflected SAR data), in particular synthetic aperture focusing algorithms to generate an image using a microwave antenna. A wide band adaptive dielectric lens is used to collimate and focus reference microwave signals at the wind turbine blade (figure 9), but utilising wide band adaptive dielectric lenses, leaves the system susceptible to phase errors. To obtain greater resolution of the blade, results may depend on the specific spectral estimation approach that is adopted, as well as scanning of nearer objects. Otherwise, a significant amount of power may be required to power the antennae to obtain clear and high resolution scans. Further, since the device is designed to be able to crawl the tower of a wind turbine while taking scans of the blades, as well as to attach to a tensile rope (in this case to take scans of the blades from the rear and from the front of each turbine), it is likely that the scanning process of each turbine would be time-consuming and repositioning of the inspection system (from back to front, on each blade, followed by the next turbine to be assessed) will cause delays and suspension or intermittent of operation of the turbines.

US2010103260A1 discloses a method for inspecting wind turbines remotely using a remotely controlled aerial vehicle capable of controlled flight with a camera amounted to the vehicle. The vehicle is positioned near the wind turbine and the camera captures images of the wind turbine for visual inspection.

. US2014168420A1 discloses a camera assembly arranged on an unmanned and autonomously navigating aerial vehicle that is deployed to inspect a surface area of a wind turbine for material defects. The vehicle is automatically flown to the surface area from a launch site, wherein it can fly around obstacles using automatic obstacle detection and avoidance methods. A position sensor records the relative position of the aerial vehicle with respect to the surface area of the turbine as the camera records a sequence of images of the surface area. The aerial vehicle navigates along a flight path overlapping image details of the surface area, and a digital image is recreated for use in identifying defects.

EP2702382A2 disclosure relates to a method and a system for checking a surface for material defects by means of a flying device that flies along a surface of a rotor blade, and that can capture defects on the surface by means of a camera. The flying device is provided with a position sensor and an inspection means, and GPS sensors can also be used for position measurement.

However, the devices disclosed in the prior art patent documents are not ideally suited for detecting damage to moving wind turbine blades. Firstly, most of the above methods require the wind turbine to be stationary and so cannot be used on moving turbines. In addition the above methods appear to use technology that is bulky and or expensive, and which in practice may prove difficult to use in remoter areas such as off-shore wind farms. Further, since some of the devices use unmanned aerial vehicles which require an operator to be nearby, thus they are unsuitable for use in off-shore wind farms which are often located many miles out to sea. But even if deployed in these environments, they do not appear to be robust enough to survive the challenging conditions found in these places. Finally, some of the devices of the prior art are susceptible to errors and rely on technologies such as position sensors which rely on GPS (which is imprecise in certain circumstances, for example in cloudy weather), and may give false and incorrect readings. Those that use remote radio links are also not suitable as it introduces reaction times and operator error. Documents US2018/149138 A1 and US2015/168352 A1 are additional prior art examples of inspecting wind turbine blades.

Accordingly, there remains a need for a smart and robust system for detecting wind blade damage that significantly reduce the cost and time associated with blade inspection, one that eliminating the requirement for a sea vessel, and ensures minimum blade downtime to maximize energy production by undertaking the inspection without halting the normal operation of the turbine.

It is an object of the present invention to obviate the above problems and provide for an improved method of assessing and inspecting of a wind turbine blade to deliver complete blade coverage and capture data without down-time and without a need to halt the operation of the wind turbine.

### Summary of the Invention

According to the first aspect of the present invention, there is provided a method for assessing and inspection of moving wind turbine blades, comprising the steps of directing a data capture means towards a wind turbine blade that is to be assessed, the data capture means being disposable on a craft means, tracking the rotating blade that is to be assessed by using a guide means, collecting data of the state or condition of the blade using the data capture means during the time that the craft means navigates around the wind turbine, feeding the data collected by the data capture means to a computer processor means, reconstructing an image from the data capture means into a 2-D or 3-D digital image of the wind turbine using the computer processor means, wherein the method is provided with at least one algorithm means to compare and contrast various parts of the digital image, with corresponding parts of a predetermined image of a healthy wind turbine, to identify defects or damage to the wind turbine, and the extent of the defects and damage, so as to ascertain if replacement of the wind turbine blade is necessary.

Preferably, the data capture means comprises an optical camera, in use adapted to capture images of a wind turbine.

The data capture means may comprise a thermal imaging camera or other suitable sensor such as an acoustic sensor.

The data capture means may comprise an ultrasonic transducer or a radio transducer.

The data capture means may comprise a plurality of sensors, transducers or another data capture device that is used to capture data.

The data capture means may be operable automatically or manually to capture data such as images of the wind turbine, as the craft negotiates around the turbine.

Preferably, the craft means comprises an aerial vehicle such as a helicopter.

The craft means may comprise an unmanned aerial vehicle such as a drone.

Alternatively, the craft means comprises a land based vehicle such as a car or a truck

The craft means may comprise a suitable land based vehicle.

Optionally, the craft means may comprise a marine vehicle such as a boat.

The craft means in use is adapted to receive or house the data capture means.

Preferably, the guide means comprises a spatially coherent light source generator such as a laser diode.

The laser diode is adapted to a laser beam capable of tracking the motion of a moving blade.

Alternatively, the guide means comprises a suitable tracking means, which tracks the blade of interest as the wind turbine blades rotate.

The guide means may comprise an electro-magnetic wave capable of tracking the motion of a moving blade.

The guide means may comprise an electro-magnetic wave capable of tracking the motion of a plurality of moving blades.

Optionally, the guide means may be adapted to track or lock onto the position of a stationary blade.

Preferably, the computer processor means comprises an onboard computer.

Alternatively, the computer processor means comprises a remote computer.

The computer processor means may comprise a micro-computer.

The computer processing means may comprise an application installed on a portable computer such as a laptop, tablet computer or on a mobile phone.

The computer processor means may comprise a high performance computer.

The computer processing means may comprise a quantum computer.

The computer processor means is adapted to run the algorithm means to compare and contrast various parts of the digital image, with corresponding parts of a predetermined image of a healthy wind turbine.

The computer processing means is adapted to identify defects or damage to the wind turbine blades, and the extent of the defect and damage.

Preferably, the algorithm means comprises an algorithm, in use to perform a step-by-step set of operations.

The algorithm means may be adapted to interface with an Artificial Intelligence (AI) engine.

The algorithm means may be adapted to use machine learning.

The algorithm means may be adapted to ascertain if replacement of a wind turbine blade is necessary.

According to a second aspect of the present invention, there is provided a data capture device for assessing and inspection of wind turbine blades, according to appended claim 17.

Other aspects are as set out in the claims herein which provide advantages for working the respective embodiments of the method of the invention.

### Brief Description of the Drawings

For a better understanding of the invention and to show how the same may be carried into effect, there will now be described by way of example only, specific embodiments, methods and processes according to the present invention with reference to the accompanying drawings in which:
**Figure 1** is a perspective view of a wind turbine, showing a position of a helicopter equipped with a data capture means approaching the frontal side of the wind turbine.
**Figure 2** is a perspective view of the wind turbine of **figure 1****,** showing a position of the helicopter, which is equipped with a data capture means, but has navigated around the turbine and is now facing the rear side of the wind turbine.
**Figure 3** is a 3-D blade geometry model of an NREL 5 Mega Watts offshore baseline wind turbine blade generated by ANSYS CFD simulation software from a CAD drawing.
**Figure 4** is a graph of a pressure plot for the blade in **figure 3** above for 4 different lengths of the airfoil, measured from the hub.
**Figure 5** is a 3-D blade geometry model of a damaged blade generated by ANSYS CFD simulation software from a CAD drawing that models the damage, showing the positions of damage.
**Figure 6** is a table showing the sizes of the damaged blade, and associated percentages
**Figure 7** is a 3-D blade geometry model of a damaged blade showing the location on the leading edge of a damaged area with a length of 12.5 metres, the damaged area beginning at a distance of 19.95 metres from the hub.
**Figure 8** is a zoom-in of the 3-D blade geometry model of the damaged area shown in **Figure 7** above.
**Figure 9** is a graph of a pressure plot for the damaged blade for 4 different lengths
**Figure 10** is a zoom-in of two pressure plots, one from **Figure 4** above showing a close view of the leading edge of healthy blade 30 metres away from the hub or bottom end, and another from **Figure 9** above showing a close view of the leading edge of a damaged area 30 metres away from the hub or bottom end.
**Figure 11** is a table showing the effects of different damage sizes on the measured power output of the blade.
**Figure 12** is a top elevation of the approximate path a craft may take to capture data from 5 wind turbines.
**Figure 13** is a top elevation of a data capture device of the second aspect of the present invention.

### Details Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

In this specification, the term "craft" includes any vehicle capable of navigating around a land or marine-based wind turbine and includes but is not limited to aircraft, land or marine surface vessels comprising helicopters, fixed wing aircraft, aerial drones, unmanned aircraft (UAV); marine surface vessels and land vehicles, either manned or unmanned.

The present invention is a method of inspection of wind turbine blades to assess their state and can be used for planning routine maintenance and/or preventing failure and/or for giving an early warning of likely failure. It offers a quick and more accurate measurement method that is repeatable and suitable for visual inspection, data collection, data analysis and database population for a large number of wind turbine blades. The method is not restricted to being used whilst the wind turbine blades are stationary, but can be used when such blades are in motion. The invention has generally a data collection phase, a data analysis or processing phase, and a data interpretation phase. The data analysis and interpretation can be automated using advanced algorithms that analyse the data gathered, onboard the craft or remotely, and compare it with historical data, and pre-defined quality benchmarks to assess and determine blade health.

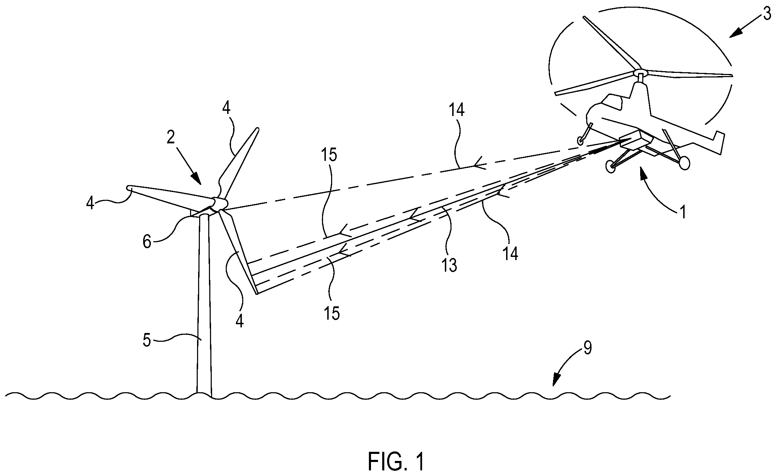

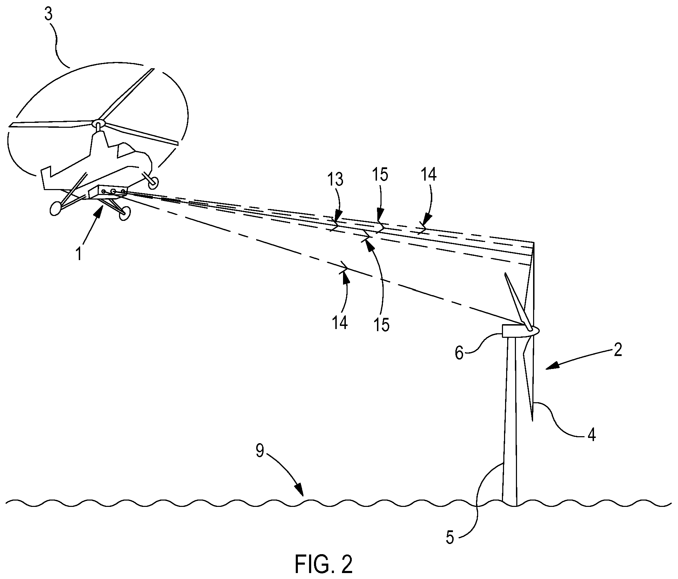

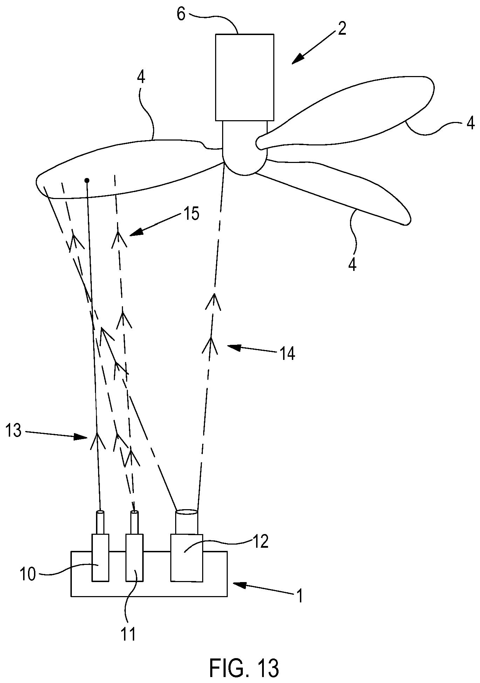

Figure 1 is a perspective view of a wind turbine being approached by a helicopter 3 equipped with a data capture device 1. The blades 4 are attached to a hub that is connected to the nacelle 6. (Figures 2, 13). The nacelle sits atop a tower 5. In Figures 1 and 2 the wind turbine is installed in an off-shore wind farm, and the tower 5 rises from water 9. The data capture device 1 may comprise an optical camera installed on a helicopter observational platform, and that is operable to capture hundreds of high resolution pictures automatically or upon the activation of a trigger. Alternatively, the data capture device 1 can be a thermal imaging camera, acoustic sensor, ultrasonic transducer, electromagnetic transducer or other suitable data collection device. This data capture device 1 would need to be either installed beneath the helicopter, on a part of the helicopter with a line-of-sight view when approaching a wind turbine, or within the helicopter prior to performing the data capture phase of the invention. A suitable installation architecture is to create an observational platform out of an open door panel on the right hand side of the helicopter 3, however the platform can also be created on the left hand side. A gimbal type support can be used to hold the data capture device 1 and allow 360 degrees motion, so that the camera rotates and keeps track of the blades as the helicopter is navigating around the turbine. Alternatively, specialist cameras or data capture devices affixed underneath or on another part of the helicopter, but which are rotatable, have tracking mechanisms, and can maintain a line of sight view of the wind turbine 2, as the helicopter 3 moves around it, can be used. These would need to be robust enough and should be fitted with anti-vibration dampers or stabilizers to prevent vibrations caused by the helicopter's motion or noise created by the helicopter's rotors (or caused by the turbines that are being inspected) from disrupting the data capture process and affecting the quality of the data that is collected. Figure 13 shows a top elevation of a data capture device 1 of one aspect of the invention. It has a guide or tracking device 10 which emits a tracking electromagnetic wave such as a laser 13. The laser 13 is adapted to track the motion of the blade 4, and "follow" the blade as it rotates, so that a first data capture instrument 11, such as an optical camera, can take pictures of the section of the blade 4 that is being tracked by the tracking device 10. In order to do this, the laser 13 must follow the blade 4 as it moves, and the position it points to, and when sufficient image data has been collected, the laser 13 must move along the blade, redirecting the first data capture instrument 11 to collect data from a different section of that same blade, until image data of the whole blade 4 has been collected. This way, the first data capture instrument 11 can obtain image data of the whole "face" of the blade as the laser 13 is pointing and moving along the blade. Once sufficient image data of one blade have been collected, the laser 13 moves to the next blade, and after sufficient image data of that next blade has been collected, to the next (for turbines with 3 blades), until the whole external face of the turbine blades has been captured. Note that ideally this process should take between 20 - 25 seconds to capture image data of one face of the wind turbine (40 to 50 seconds for the whole turbine), comprising three blades, however the more image data that is collected, the more accurate the reconstructed virtual image will be. Thus, it is possible to collect more image data although this will mean longer data collection time, and may affect the overall cost of the data acquisition phase. When the helicopter 3 moves to a position where it is facing the rear of the turbine (figure 2), the image capture operation is repeated until image data of the whole rear of the turbine has been collected. Thus, the device is provided with object recognition capability to recognize and follow the blade as it rotates and capture image data of the frontal face, rear face and curved sections of each blade. A second data capture instrument 12 is also provided, which is adapted to capture the data of the whole blade 4, so that feedback is provided to the first data capture instrument 11 and the tracking device 10. Since the tip of the blade is typically rotating at 100m/s, this feedback enables the data capture device 1 to know where each blade currently is, and which blade the first data capture instrument 11 should be assessing. The data from the second data capture instrument 12 is also used to capture images which will be used by data processing software to build the virtual or digital image of the turbine. This overall image will be "enriched" by images captured by the first data capture instrument 11, so that it is more accurate. In essence the first data capture means "zooms in" on "spots" pointed to by the laser 13, to capture hundreds of high resolution images. The second data capture instrument 12 may be adapted to capture image data of the whole turbine.

In terms of the specification of the optical camera, a colour camera with optics of a diameter of 15cm and a focal length of approximately 50 cm can be used. This may be coupled with a high resolution sensor which would provide approximately 3000x3000 pixels over a 1° by 1° field of view. This should give a good resolvability for a 2cm object at a distance of approximately 300 metres, when the laser is tracking the motion of the blade with no interruptions.
With such a large optical diameter, the "depth of view" becomes vanishingly small (a couple of metres at a focus distance of 230 metres), however the system can be optimized to use a lower aperture size without compromising performance. This means the system must have extremely capable focus mechanism, and conventional methods of estimating the distance from the camera to the patch of turbine blade that is being captured can be adopted to achieve this. Alternatively, a long wave infrared camera can also be used.

In order for the data capture phase of the method to be optimum, the helicopter or craft carrying the data capture device 1 must maintain a distance of around 500ft from all parts of the wind turbine at all times. This will require skill and training, but is something that experienced pilots will be able to achieve. During operation, the wind turbines are rotating at approximately 10 RPM, with the tip moving at 100m/s. Thus, in order for the data capture process to be quick and efficient, then the system must be able to capture image data from between 50 to 100 wind turbines in 2.5 hours. This means that the goal is to circle each turbine once, with each circle lasting approximately 40 or 50 seconds, and in that time capturing approximately 400 images of each turbine (approximately 10 images per second). This reduces the cost of inspection and would enable the system to be suitable for installation in a wide variety of helicopters and craft, without compromising range or accuracy and performance of the data collection and defect identification. Similarly, the data capture phase of the method can be undertaken using a data capture devices other than an optical camera, and similar principles and considerations will apply.

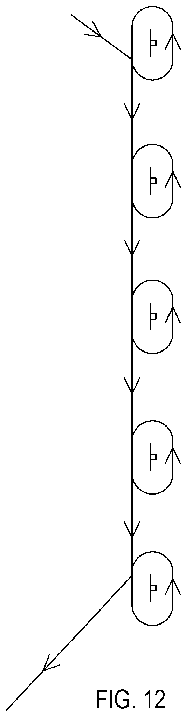

In order to capture image data efficiently, the helicopter must circle the wind turbine once. However, if time / cost are not restrictive factors, the helicopter can circle the turbine more than once. Thus in figure 1, the helicopter can be seen approaching the turbine from the hub, and as it navigates around the turbine, the data capture device 1 will take hundreds of images of all parts of the turbine. Figure 12 shows the approximate path the helicopter may take to capture data from 5 wind turbines, with the arrows showing the direction of travel. This ensures that data is gathered quickly and efficiently.

For each turbine, the helicopter is guided to approach and circle the turbine, and each image taken is subsequently textured onto a virtual turbine representing the external model (or internal model if also using a thermal imaging camera) of the turbine by processing software. The incident waves 15 (figure 13) of the first data capture instrument are reflected by the section of the blade 4 onto which they impact, and the reflection is registered by the sensor element on the first data capture instrument 11. Similarly, incident waves 14 from the second data capture instrument 12 are reflected by the blade 4, and registered by the sensing element. This image data enables the reconstruction of the turbine. As the image of the blade 4 is re-constructed, anomalies between what the historical data defines as a value for a particular section of the blade, and what the camera has gathered as the actual value, will define defects, within reasonable tolerances and verified by conventional error-checking methods. Thus, defects on the blades of the real turbine can be identified on the reconstructed virtual or digital turbine.

Similarly, using a thermal imaging camera, an ultrasonic transducer, or other suitable sensor, which may form part of the data capture device that includes an optical camera, the internal geometry of the blade can also be inspected and any defects identified and ascertained.

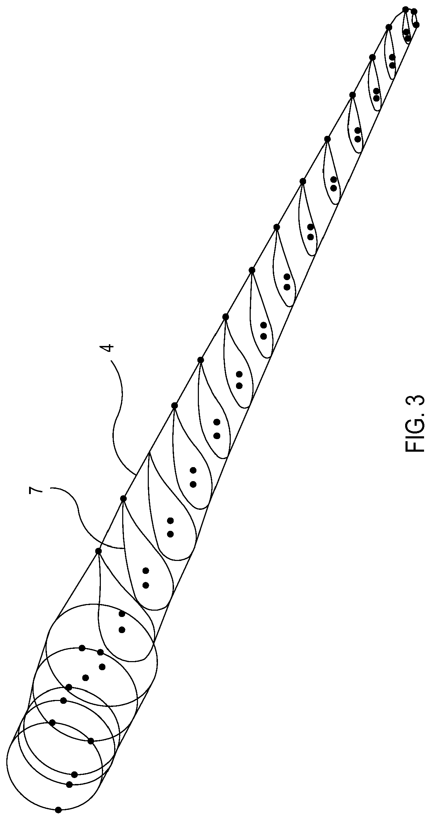

In analysing the data that is gathered by the data capture phase, the image data has to be imported into a software system that undertakes the reconstruction of the virtual image. This can be done on a computing system aboard the helicopter, or remotely during the data capture phase (using a conventional data transfer link that transfers the data from the helicopter to a remote location for analysis). Alternatively it can be done after the data capture phase, whereby the data is fed into a computing system for analysis. There are many data processing software packages on the market that can undertake such an exercise. Such software includes modularization, aero-hydro-servo-elastic tools, and other aerodynamics multi-physics engineering software and generally software simulation tools. One such software package is ANSYS CFX, a high-performance computational fluid dynamics (CFD) software package that can be employed to create virtual images of turbines, from hundreds of files of image data. In order to demonstrate the accuracy of these software packages, in as far as calculating values for a blade that are comparable or equal to the manufacturer specified values (within an acceptable error margin), one method uses meshing, whereby an IGES file created by a CAD program such as SolidWorks can be imported into ANSYS MESHING CFD grid generation system to generate the computational grids required for the CFD analyses. Figure 3 shows a 3-D blade geometry model of an NREL 5 Mega Watts (MW) offshore baseline wind turbine blade 4 generated by ANSYS CFD simulation software from a CAD drawing, showing airfoils cross sections 7. As a form of background, the NREL 5 MW offshore baseline wind turbine blade properties are based on the values given in the report titled *"Aeroelastic Modelling of the LMH64-5 Blade" by* C.Lindenburg.

Meshing using boundary conditions (domain, physical or periodic) can help determine the torque and output power of a turbine blade, however periodic boundary conditions are used when the physical geometry of interest and the expected pattern of the flow have a periodically repeating nature (see *Fluent Inc., 2006; Bazilevs, et al., 2011* incorporated herein by reference). Thus, for a healthy blade as the NREL 5MW blade mentioned above, typical boundary condition created in ANSYS software are fed an inflow speed where u=11.4 m/s and Ω=12.1 RPM. These values help to replicate the rated power output of a blade. The result is compared against the power output of an identical blade from a reconstructed virtual image of that blade. This way, the known blade characteristics as specified by the manufacturer can be compared with the blade characteristics of the virtual blade that is formed from the image data captured by inspection of a real blade, to determine if certain external or internal structural changes of the blade affect the performance of the blade and if so, the extent of the effect. Thus, as an example, in one lab experiment of the method of the present invention, using ANSYS MESHING CFD grid generation system to simulate the behavior of a healthy blade, it was found that using the 'sweep method' and sampling 1,260,773 elements from one grid or mesh of the NREL 5MW blade, created 2,227,207 nodes, the process taking 480 seconds. Similarly, a sweep of 6,808,621 elements from another grid can achieve around 3,155,391 nodes in 600 seconds, whereas a sweep of 40,679,329 elements was able to achieve 10,683,442 in 5400 seconds, using an inflow speed =11.4 m/s and Ω=12.1 RPM rotational speed. Note that different nodes will be moving at different speeds. The grids analysed with this approach are structured in most parts of the domain, around the blade, and also along the far field and periodicity boundaries towards the blade. Because of the computing power required, it is important that the computing means be robust and powerful. Thus, if the sweeping method was undertaken using an Intel Core i7-2630 QM processor clocking at 2.9 GHz, with 8 GB RAM and 1TB RADEON GRAPHIC 64 BIT hard drive for example, it would result in minimal run-times to create the CFD grids that are used to determine output power. Thus, a more powerful processor would be desirable, for faster and more elaborate meshing. Generally, it is time-consuming to generate fully structured meshes from the far field boundaries to the blade surface, however the more structured meshes are created, the higher the accuracy of the results obtained.

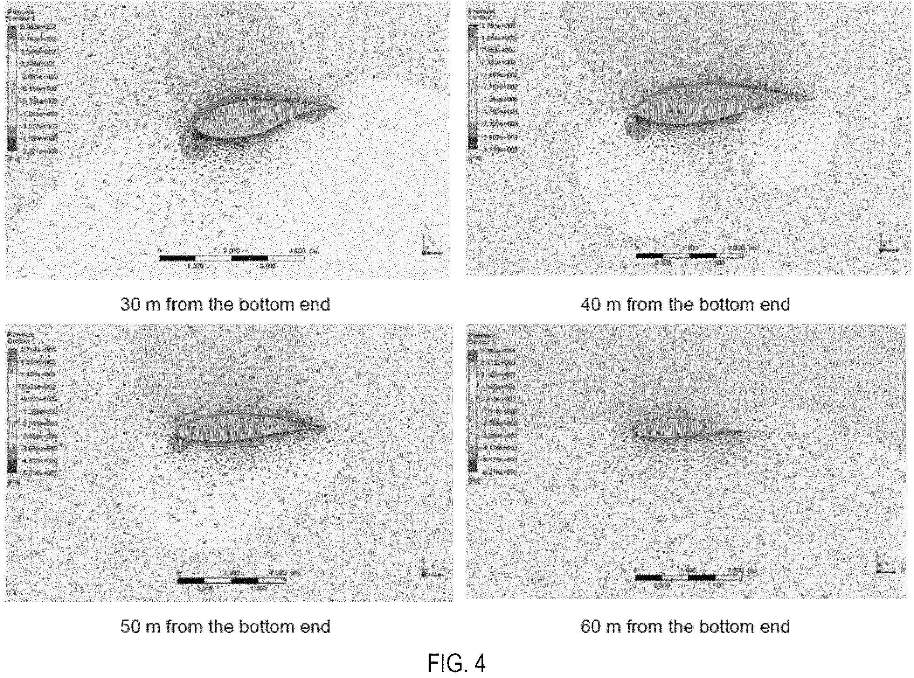

Figure 4 is a graph of a pressure plot for the blade in figure 3 above for 4 different lengths (airfoils of figure 3). Generally, the colours denote areas experiencing different levels of pressure, to denote a pressure contour. Variations in pressure between a healthy blade and a blade with damage will translate into differences in power output of the blades. To demonstrate how power output is calculated by the simulation, the shear stress transport (SST) turbulence model can be used to account for turbulent flow effects. On the inflow boundaries, the free stream velocity is set to 11.8 m/s (a value that is close to the rated wind speed of the NREL 5 MW turbine), and on the outflow boundaries a relative static pressure of 0 is selected. The free stream density is set to 1.185 Kg/m3, and a free slip wall applied to the top cylindrical boundary. Further, periodicity conditions have been applied on the lateral boundaries of the domain. The use of periodicity boundary conditions enables the modelling of a single blade sector rather than the region past all three blades, which reduces the run-time or computational cost by a factor 3, but also only calculates the power output of the single blade. The rotational axis is the Y axis and the rotor angular speed is set to -1.17 rad/s. The convergence criteria for the residual target are set on 1e-5 and RMS type and the maximum number of 150 iterations has been set for convergence control. 40 million-element grids were used for the simulations. Each simulation took 1.566E+05 seconds, corresponding to 1 day 19 hours 29 minutes and 40.406 seconds to reach convergence criteria (residual threshold of 1e-5) with 120 iterations. Alternatively, the computing can be undertaken by a more powerful computer such as a high end computing cluster, which can reduce the simulation time to less than 1 hour.

The Output power can be calculated by following formula: P=τ×ω where P is power for one blade, τ is torque for one blade ω is angular velocity (rotor angular speed). The torque for a healthy blade within CFX is found from the following formula: torque_y()@airfoil, and is equal to -1.66774e+006 (N m). Thus, the output power of this model is equal to 1.9512558e+006 (Nm/s) for one blade. Full output power for the wind turbine can be calculated by the following formula: Δ*P= P*×*n* where Δ*P* is the total output power for the whole wind turbine, P is power for one blade and n is the number of the blades. The wind turbine has 3 blades therefore the output power for this wind turbine is equal to 5.8 MW.

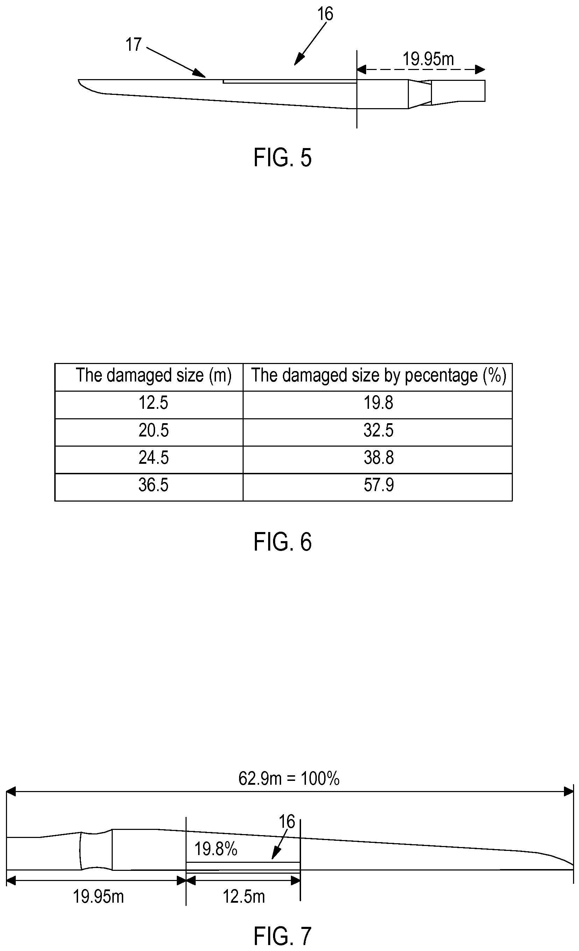

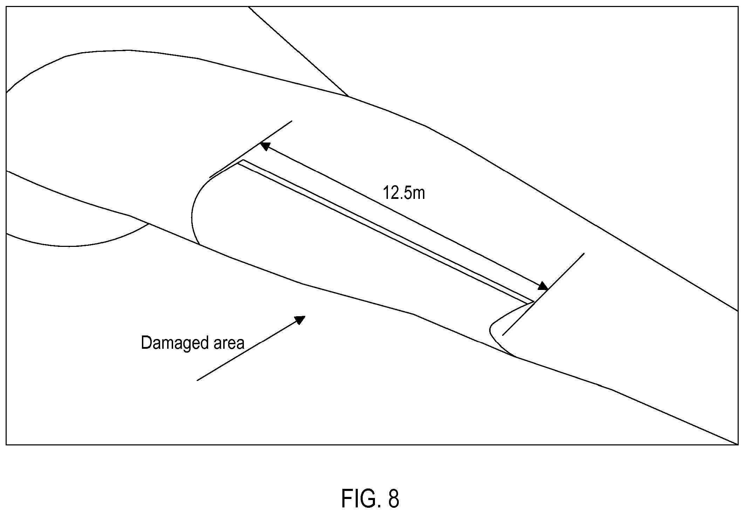

Figure 5 is a 3-D blade geometry model of a damaged blade, showing the positions of simulated damage 16 on the leading edge 17 of the blade generated by ANSYS CFD simulation software from a CAD drawing that models the damage. This means that any damage that is captured by the camera in the hundreds of photos of image data that are collected will be picked up by the simulation software, and will be a distinctive feature in the recreated virtual wind turbine image created by the software. Thus, figure 6 is a table showing the sizes of the damaged blade, and associated percentages in comparison to the whole. The *damaged size* in percentage terms (%) is calculated using = *Damaged area* ÷ *blade length.* In this simulation, the damage area begins 19.95 m from the hub (19.95 m from the point where the blade attaches to the hub), as shown on figures 7 and 8, with figure 8 showing a zoom-in of the 3-D blade geometry model of the damaged area 16 shown in figure 7. Note that the damage shown in figure 8 corresponds to the 12.5 m damage size in the table of figure 6. Figure 9 is a graph of a pressure plot for the damaged blade for 4 different lengths.

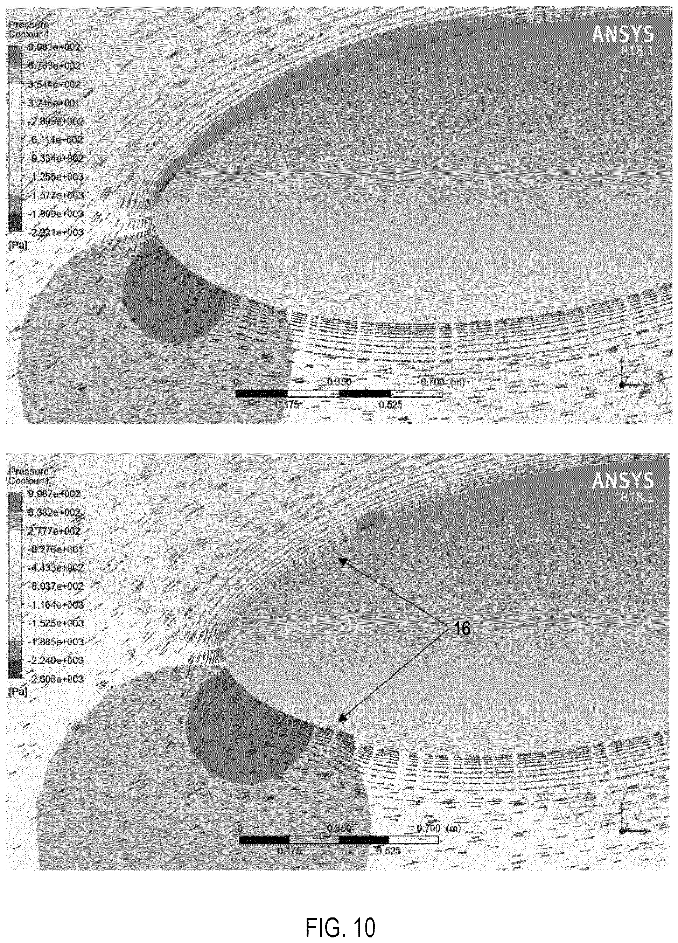

There are differences between the pressure plot of a healthy blade, and the pressure plot of a damaged blade (figure 10). Such differences can be quantified in a number of ways but one way of quantifying such differences is to compare the power output of a healthy blade, with that of a blade that may have damage. Thus, the statistical operation undertaken above with the healthy NREL 5MW blade is repeated with a damaged NREL 5MW blade using the same computer software.

The computer processing apparatus used in this method can be provided with or can interface to design data or databases having details of manufacturer data for each type of blade. Thus, it will be important for details of the type of blade that has been inspected or that is due to be inspected, to be specified before the inspection or during data analysis, in the interest of like-for-like comparison, since the databases will contain details of different kinds of blades, with varying properties, and an error will occur if damage analysis comparison is undertaken on dissimilar blades.

For blades installed in a wind farm that is to be analysed for damage, each blade's individual data must be collected and also manipulated to calculate the torque and output power as described in the above meshing process. The aim is to use suitable sensors to collate sufficient data to develop a CAD model of a moving blade with sufficient detail of the leading edge damage.

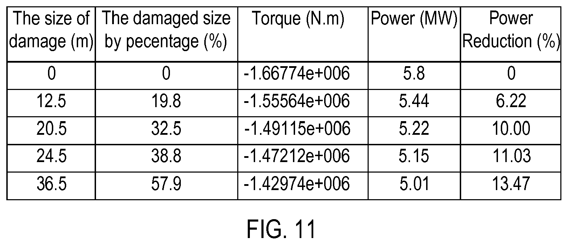

The results of the cad simulation using the same setup (Boundary condition, Flow domain, mesh size) for a blade with various damaged size are plotted in figure 11. The first line shows a blade without damage, whose power output is 5.8MW. As can be seen, the output power has reduced by 6.22 % in the blade with 19.8% damaged area. Increasing the damaged size from 12.5 m to 36.5 m has the effect of reducing the output power by 13.47 %. Thus, there is a clear reduction in power output of the turbine as a result of damage to the blade.

Thus, in a preferred embodiment, a method for assessing and inspection of wind turbine blades 4, in particular moving wind turbine blades, comprises the steps of directing a data capture device such as a camera system 1 towards a wind turbine blade 4 that is to be assessed; the camera system 1 is attached to an aerial craft such as a helicopter 3, and is provided with a guide means such as a laser 13 that is used to track the motion of the blade 4 that is to be assessed, and feed the camera system the position of the area that is to be photographed. The laser 13 may be adapted to track a single blade 4 or the camera system 1 may be provided with multiple lasers to track multiple blades at the same time. The method further comprises collecting data of the state or condition of the blade 4 using the camera system 1 during the time that the helicopter 3 navigates around the wind turbine 2. The image data of the blade that is captured is fed into a computer processor (not shown) which can be on-board the helicopter or at a remote location. The computer processor is adapted to reconstruct the image data into a 2-D or 3-D digital or virtual image of the wind turbine. The method further comprises using at least one algorithm to compare and contrast various parts of the digital image generated by the reconstruction, with corresponding parts of a predetermined image of a healthy wind turbine, to identify defects or damage to the actual wind turbine, and the extent of the defects and damage. Using machine learning, the method can ascertain if repair or replacement of the wind turbine blade is necessary, by reference to metrics such as a drop in power output.

The method provides an intelligent and sensitive system that can distinguish between an undamaged surface and a damaged surface. Position sensors may be used to keep track of each and every turbine, so that during reconstruction and creation of the virtual blade, image data integrity from each blade is assured.

In the method, software is used to transform collected data into the required CAD model, that is subsequently transformed into a virtual image that can be assessed to provide a damage assessment report stating the extent of the damage, and the potential performance improvement by repairing or replacing the damage.

A computer or hand-held mobile phone application can be used to undertake some of the iterations. Wi-Fi or a mobile telephone network, may be employed to transmit data from the data capture device to the computer processor. Alternatively, data stored onto the storage memory of the data capture device can be manually transferred to the computing processing device, to begin the reconstruction of the virtual image.

Other sensors that can be used to capture data include an infrared camera, an acoustic transmitter, an acoustic receiver, a radiation source, a radiation detector, an ultrasonic device, a radiographic device, a thermographic device, and other suitable electromagnetic devices.

In addition, data from the computer processor unit could be collated into historical data on each blade, to create a profile that maps the normal power output for a given wind speed against reduced operation for the same wind speed. A threshold can be manually or automatically set, to ascertain a position, when power output is significantly low, and the blade is in need of repair or replacement. An Artificial intelligence engine can be employed to calculate the extent by which various parts of a blade have worn, based on data fed into it, and at what point bade replacement can achieve efficiency.

The technology may be adapted to undertake data capture of several turbine blades at the same time. For this to be possible, the device can be fitted with several sensors coupled to several lasers to simultaneously track and capture image data of a plurality of turbines.

The benefits of the device are significant. It would prevent the loss of revenue by allowing the turbine to continue generating throughout the inspection, maximising efficiency and revenue for the wind farm operator

Since workers are not endangered whilst working at height, and the wind farm has less down time due to shorter inspections periods, there would be an increase of production time .

Data signatures of each turbine can be developed into a database. A healthy blade will have a particular type of signature, whereas a blade with a defect will also have a signature corresponding to the level of defect. As more measurements are taken, and more blades inspected, a continuum of signatures will be developed, and a large dataset created. An A.I. engine and machine learning can be employed to predict, considering historical data of other turbines in the area, what the lifecycle of a new turbine will look like, and to map how much defect is acceptable, before the turbine must be replaced. Similarly, an acoustic signature, or thermal imaging signatures taken from blades, before and after the defect, can also be used as a blade inspection method, and to monitor the performance (and power output) of each wind turbine over time.

**.** Having described and illustrated the principles of the invention with reference to preferred embodiments, it will be apparent to a skilled man in the art that the invention can be modified in arrangement and detail without departing from such principles. Accordingly, in view of the many possible embodiments to which the principles may be put, it should be noted that the detailed embodiments are illustrative only and should not be taken as limiting the scope of the invention.

## Claims

1. A method for assessment of one or more moving wind turbine blades (4) of a wind turbine (2), said method comprising:
directing a data capture means (11, 12) towards a wind turbine blade (4) that is to be assessed, said data capture means (11, 12) being disposed on a craft (3);
tracking a rotating wind turbine blade (4) that is to be assessed using a guide means (10);
collecting data of a state of said wind turbine blade (4) using said data capture means (11, 12) during a time that said craft navigates around said wind turbine (2);
feeding said data collected by said data capture means (11, 12) to a computer processor;
reconstructing an image derived from data captured by said data capture means (11, 12) into a 2-D or 3-D digital image of said wind turbine blade using said computer processor,
applying an algorithm to said digital image of said tracked wind turbine blade (4) to compare parts of said digital image with corresponding parts of a predetermined image of a healthy wind turbine blade, to identify defects or damage to said tracked wind turbine blade (4).

2. The method as claimed in claim 1, further comprising using said identified defects or damage to determine if replacement, maintenance or repair of said wind turbine blade (4) is necessary.

3. The method as claimed in claim 1, wherein said data capture means (11, 12) comprises one or more devices selected from the set:
an optical digital camera;
an acoustic sensor;
a thermal imaging camera;
a plurality of sensors and/or transducers used together to capture data.

4. The method as claimed in any one of the preceding claims, wherein the data capture means (11, 12) is operable automatically or manually to capture images of said wind turbine blade (4) as said craft (3) navigates around a wind turbine (2).

5. The method as claimed in any one of the preceding claims, wherein said craft (3) is selected from the set:
an aircraft;
a helicopter;
an unmanned aerial vehicle;
a drone;
a land vehicle;
a marine craft or vehicle.

6. The method as claimed in any one of the preceding claims, wherein said data capture means (11, 12) is mounted on said craft (3).

7. The method as claimed in any one of the preceding claims, comprising tracking said wind turbine blade (4) using a laser (13).

8. The method as claimed in claim 6, wherein said guide means (10) comprises a coherent light source.

9. The method as claimed in any one of the preceding claims, wherein said craft (3) navigates around said wind turbine (2) at least once.

10. The method of claim 6 comprising tracking a motion of a moving turbine blade (4) using an electromagnetic wave.

11. The method as claimed in any one of claims 6 to 8, comprising tracking the motion of a plurality of said moving wind turbine blades (4) simultaneously.

12. The method as claimed in any one of the preceding claims, wherein said algorithm compares and contrasts individual regions of a said digital image of a said wind turbine blade (4) with corresponding regions of a predetermined image of a healthy and/or undamaged wind turbine blade.

13. The method as claimed in any one of the preceding claims comprising:
collecting a plurality of datasets each corresponding to a respective wind turbine blade (4);
each said dataset comprising one or a plurality of digital images of said corresponding wind turbine blade;
entering said plurality of datasets into an artificial intelligence engine.

14. The method as claimed in claim 13 wherein said artificial intelligence engine comprises said algorithm to compare and contrast parts of said digital image with corresponding parts of a predetermined image of a healthy wind turbine blade.

15. The method as claimed in claim 13 or 14, comprising:
identifying one or more defects or regions of damage of said tracked wind turbine blade as an output of said artificial intelligence engine.

16. The method as claimed in any one of claims 13 to 15, further comprising:
obtaining a determination of whether a said wind turbine blade (4) requires replacement and/or maintenance and/or servicing as an output of said artificial intelligence.

17. A data capture device (1) for assessing and/or inspecting at least one rotating wind turbine blade (4) of a wind turbine (2), said device (1) comprising:
a data capture means (11, 12) configured for direction towards a wind turbine blade (4) that is to be assessed; said data capture means (11, 12) being capable of being carried by a craft (3) capable of navigating around said wind turbine (2);
tracking means for tracking an individual rotating wind turbine blade (4) of said wind turbine (2);
data collection means for collecting data captured by data capture means (11, 12);
means for reconstructing a 2-D or 3-D digital image of a said tracked wind turbine blade (4);
means for comparing regions of said reconstructed digital image with a digital image of an undamaged healthy wind turbine blade;
means for identifying regions of damage or defect in said reconstructed digital image of said tracked wind turbine blade (4); and
means for determining if maintenance, servicing and/or maintenance of said wind turbine blade (4) is necessary.

## Patentansprüche

1. Verfahren zur Bewertung von einer oder mehreren sich bewegenden Windturbinenschaufeln (4) einer Windturbine (2), wobei das Verfahren Folgendes umfasst:
Richten eines Datenerfassungsmittels (11, 12) auf eine Windturbinenschaufel (4), die zu bewerten ist, wobei das Datenerfassungsmittel (11, 12) an einem Gefährt (3) angeordnet ist;
Verfolgen einer sich drehenden Windturbinenschaufel (4), die zu bewerten ist, unter Verwendung eines Führungsmittels (10);
Sammeln von Daten eines Zustands der Windturbinenschaufel (4) unter Verwendung des Datenerfassungsmittels (11, 12) während einer Zeit, in der das Gefährt um die Windturbine (2) navigiert;
Zuführen der Daten, die durch das Datenerfassungsmittel (11, 12) gesammelt werden, zu einem Computerprozessor;
Rekonstruieren eines Bildes, das von Daten abgeleitet ist, die durch das Datenerfassungsmittel (11, 12) erfasst werden, in ein 2D- oder 3D-Digitalbild der Windturbinenschaufel unter Verwendung des Computerprozessors,
Anwenden eines Algorithmus auf das Digitalbild der verfolgten Windturbinenschaufel (4), um Teile des Digitalbildes mit entsprechenden Teilen eines vorbestimmten Bildes einer gesunden Windturbinenschaufel zu vergleichen, um Defekte oder Schäden an der verfolgten Windturbinenschaufel (4) zu identifizieren.

2. Verfahren nach Anspruch 1, ferner umfassend Verwenden der identifizierten Defekte oder Schäden, um zu bestimmen, ob Austausch, Wartung oder Reparatur der Windturbinenschaufel (4) erforderlich ist.

3. Verfahren nach Anspruch 1, wobei das Datenerfassungsmittel (11, 12) eine oder mehrere Vorrichtungen ausgewählt aus dem folgenden Satz umfasst:
einer optischen Digitalkamera;
einem akustischen Sensor;
einer thermischen Bildgebungskamera;
einer Vielzahl von Sensoren und/oder Wandlern, die zusammen verwendet werden, um Daten zu erfassen.

4. Verfahren nach einem der vorhergehenden Ansprüche, wobei das Datenerfassungsmittel (11, 12) automatisch oder manuell bedienbar ist, um Bilder der Windturbinenschaufel (4) zu erfassen, während das Gefährt (3) um eine Windturbine (2) navigiert.

5. Verfahren nach einem der vorhergehenden Ansprüche, wobei das Gefährt (3) ausgewählt ist aus dem folgenden Satz:
einem Luftfahrzeug;
einem Hubschrauber;
einem unbemannten Luftfahrzeug;
einer Drohne;
einem Landfahrzeug;
einem Wassergefährt oder -fahrzeug.

6. Verfahren nach einem der vorhergehenden Ansprüche, wobei das Datenerfassungsmittel (11, 12) an dem Gefährt (3) montiert ist.

7. Verfahren nach einem der vorhergehenden Ansprüche, umfassend Verfolgen der Windturbinenschaufel (4) unter Verwendung eines Lasers (13).

8. Verfahren nach Anspruch 6, wobei das Führungsmittel (10) eine kohärente Lichtquelle umfasst.

9. Verfahren nach einem der vorhergehenden Ansprüche, wobei das Gefährt (3) zumindest einmal um die Windturbine (2) navigiert.

10. Verfahren nach Anspruch 6, umfassend Verfolgen einer Bewegung einer sich bewegenden Turbinenschaufel (4) unter Verwendung einer elektromagnetischen Welle.

11. Verfahren nach einem der Ansprüche 6 bis 8, umfassend Verfolgen der Bewegung einer Vielzahl der sich bewegenden Windturbinenschaufeln (4) gleichzeitig.

12. Verfahren nach einem der vorhergehenden Ansprüche, wobei der Algorithmus einzelne Bereiche eines solchen Digitalbildes einer solchen Windturbinenschaufel (4) mit entsprechenden Bereichen eines vorbestimmten Bildes einer gesunden und/oder unbeschädigten Windturbinenschaufel vergleicht und kontrastiert.

13. Verfahren nach einem der vorhergehenden Ansprüche, umfassend:
Sammeln einer Vielzahl von Datensätzen, die jeweils einer jeweiligen Windturbinenschaufel (4) entsprechen;
wobei jeder Datensatz ein oder eine Vielzahl von Digitalbildern der entsprechenden Windturbinenschaufel umfasst;
Eingeben der Vielzahl von Datensätzen in eine Maschine mit künstlicher Intelligenz.

14. Verfahren nach Anspruch 13, wobei die Maschine mit künstlicher Intelligenz den Algorithmus umfasst, um Teile des Digitalbildes mit entsprechenden Teilen eines vorbestimmten Bildes einer gesunden Windturbinenschaufel zu vergleichen und zu kontrastieren.

15. Verfahren nach Anspruch 13 oder 14, umfassend:
Identifizieren von einem oder mehreren Defekten oder Schadensbereichen der verfolgten Windturbinenschaufel als eine Ausgabe der Maschine mit künstlicher Intelligenz.

16. Verfahren nach einem der Ansprüche 13 bis 15, ferner umfassend:
Erhalten einer Bestimmung, ob eine solche Windturbinenschaufel (4) Austausch und/oder Wartung und/oder Instandhaltung erfordert, als eine Ausgabe der künstlichen Intelligenz.

17. Datenerfassungsvorrichtung (1) zum Bewerten und/oder Inspizieren von zumindest einer sich drehenden Windturbinenschaufel (4) einer Windturbine (2), wobei die Vorrichtung (1) Folgendes umfasst:
ein Datenerfassungsmittel (11, 12), das für Richtung zu einer Windturbinenschaufel (4), die zu bewerten ist, konfiguriert ist; wobei das Datenerfassungsmittel (11, 12) in der Lage ist, durch ein Gefährt (3) getragen zu werden, das in der Lage ist, um die Windturbine (2) zu navigieren;
Verfolgungsmittel zum Verfolgen einer einzelnen sich drehenden Windturbinenschaufel (4) der Windturbine (2);
Datensammelmittel zum Sammeln von Daten, die durch Datenerfassungsmittel (11, 12) erfasst werden;
Mittel zum Rekonstruieren eines 2D- oder 3D-Digitalbildes einer solchen verfolgten Windturbinenschaufel (4);
Mittel zum Vergleichen von Bereichen des rekonstruierten Digitalbildes mit einem Digitalbild einer unbeschädigten gesunden Windturbinenschaufel;
Mittel zum Identifizieren von Schadens- oder Defektbereichen in dem rekonstruierten Digitalbild der verfolgten Windturbinenschaufel (4); und
Mittel zum Bestimmen, ob Wartung, Instandhaltung und/oder Wartung der Windturbinenschaufel (4) erforderlich ist.

## Revendications

1. Procédé permettant l'évaluation d'une ou de plusieurs pales (4) d'éolienne en mouvement d'une éolienne (2), ledit procédé comprenant :
la direction d'un moyen de capture de données (11, 12) vers une pale (4) d'éolienne qui doit être évaluée, ledit moyen de capture de données (11, 12) étant disposé sur un engin (3) ;
le suivi d'une pale (4) d'éolienne en rotation qui doit être évaluée à l'aide d'un moyen de guidage (10) ;
la collecte de données d'un état de ladite pale (4) d'éolienne à l'aide dudit moyen de capture de données (11, 12) pendant une période pendant laquelle ledit engin navigue autour de ladite éolienne (2) ;
la fourniture desdites données collectées par ledit moyen de capture de données (11, 12) à un processeur informatique ;
la reconstruction d'une image dérivée de données capturées par ledit moyen de capture de données (11, 12) en une image numérique 2D ou 3D de ladite pale d'éolienne à l'aide dudit processeur informatique,
l'application d'un algorithme à ladite image numérique de ladite pale (4) d'éolienne suivie pour comparer des parties de ladite image numérique avec des parties correspondantes d'une image prédéterminée d'une pale d'éolienne saine, pour identifier des défauts ou des dommages à ladite pale (4) d'éolienne suivie.

2. Procédé selon la revendication 1, comprenant en outre l'utilisation desdits défauts ou dommages identifiés pour déterminer si un remplacement, une maintenance ou une réparation de ladite pale (4) d'éolienne est nécessaire.

3. Procédé selon la revendication 1, ledit moyen de capture de données (11, 12) comprenant un ou plusieurs dispositifs sélectionnés parmi l'ensemble suivant :
une caméra numérique optique ;
un capteur acoustique ;
une caméra d'imagerie thermique ;
une pluralité de capteurs et/ou de transducteurs utilisés ensemble pour capturer des données.

4. Procédé selon l'une quelconque des revendications précédentes, ledit moyen de capture de données (11, 12) pouvant fonctionner automatiquement ou manuellement pour capturer des images de ladite pale (4) d'éolienne lorsque ledit engin (3) navigue autour d'une éolienne (2).

5. Procédé selon l'une quelconque des revendications précédentes, ledit engin (3) étant choisi parmi l'ensemble suivant :
un aéronef ;
un hélicoptère ;
un véhicule aérien sans pilote ;
un drone ;
un véhicule terrestre ;
un engin ou véhicule maritime.

6. Procédé selon l'une quelconque des revendications précédentes, ledit moyen de capture de données (11, 12) étant monté sur ledit engin (3).

7. Procédé selon l'une quelconque des revendications précédentes, comprenant le suivi de ladite pale (4) d'éolienne à l'aide d'un laser (13).

8. Procédé selon la revendication 6, ledit moyen de guidage (10) comprenant une source de lumière cohérente.

9. Procédé selon l'une quelconque des revendications précédentes, ledit engin (3) naviguant autour de ladite éolienne (2) au moins une fois.

10. Procédé selon la revendication 6, comprenant le suivi d'un mouvement d'une pale (4) d'éolienne en mouvement à l'aide d'une onde électromagnétique.

11. Procédé selon l'une quelconque des revendications 6 à 8, comprenant le suivi du mouvement d'une pluralité desdites pales (4) d'éolienne en mouvement simultanément.

12. Procédé selon l'une quelconque des revendications précédentes, ledit algorithme comparant et contrastant des régions individuelles d'une dite image numérique d'une dite pale (4) d'éolienne avec des régions correspondantes d'une image prédéterminée d'une pale d'éolienne saine et/ou non endommagée.

13. Procédé selon l'une quelconque des revendications précédentes, comprenant :
la collecte d'une pluralité d'ensembles de données correspondant chacun à une pale (4) d'éolienne respective ;
chaque dit ensemble de données comprenant une ou une pluralité d'images numériques de ladite pale d'éolienne correspondante ;
l'entrée de ladite pluralité d'ensembles de données dans un moteur d'intelligence artificielle.

14. Procédé selon la revendication 13, ledit moteur d'intelligence artificielle comprenant ledit algorithme pour comparer et contraster des parties de ladite image numérique avec des parties correspondantes d'une image prédéterminée d'une pale d'éolienne saine.

15. Procédé selon la revendication 13 ou 14, comprenant :
l'identification d'un ou de plusieurs défauts ou régions de dommages de ladite pale d'éolienne suivie en tant que sortie dudit moteur d'intelligence artificielle.

16. Procédé selon l'une quelconque des revendications 13 à 15, comprenant en outre :
l'obtention d'une détermination du fait qu'une dite pale (4) d'éolienne nécessite, ou non, un remplacement et/ou une maintenance et/ou un entretien en tant que sortie de ladite intelligence artificielle.

17. Dispositif de capture de données (1) pour évaluer et/ou inspecter au moins une pale (4) d'éolienne en rotation d'une éolienne (2), ledit dispositif (1) comprenant :
un moyen de capture de données (11, 12) configuré pour une direction vers une pale d'éolienne (4) qui doit être évaluée ; ledit moyen de capture de données (11, 12) étant capable d'être porté par un engin (3) capable de naviguer autour de ladite éolienne (2) ;
un moyen de suivi pour suivre une pale (4) d'éolienne en rotation individuelle de ladite éolienne (2) ;
un moyen de collecte de données pour collecter des données capturées par un moyen de capture de données (11, 12) ;
un moyen de reconstruire une image numérique 2D ou 3D d'une dite pale (4) d'éolienne suivie ;
un moyen de comparaison de régions de ladite image numérique reconstruite avec une image numérique d'une pale d'éolienne saine non endommagée ;
un moyen d'identification de régions de dommages ou de défauts dans ladite image numérique reconstruite de ladite pale (4) d'éolienne suivie ; et
un moyen de détermination du fait qu'une maintenance, un entretien et/ou une maintenance de ladite pale (4) d'éolienne est nécessaire ou non.
